Europäisches Patentamt

European Patent Office

Office européen des brevets

(19)

(11) EP 0 711 981 A2

(12) **EUROPÄISCHE PATENTANMELDUNG**

(43) Veröffentlichungstag:
15.05.1996 Patentblatt 1996/20

(51) Int. Cl.⁶: **G01F 9/00**

(21) Anmeldenummer: 95116520.8

(22) Anmeldetag: 20.10.1995

(84) Benannte Vertragsstaaten:
**DE FR GB IT**

(30) Priorität: **10.11.1994 DE 4440089**

(71) Anmelder: **MERCEDES-BENZ AG**
**D-70567 Stuttgart (DE)**

(72) Erfinder:
• **Hornburg, Gerald, Dipl.-Ing.**
**D-89275 Elchingen (DE)**
• **Sonntag, Josef, Dipl.-Ing.**
**D-89257 Illertissen (DE)**
• **Fleck, Wolfram, Dipl.-Ing.**
**D-89155 Erbach (DE)**
• **Gaulhofer, Andreas, Dipl.-Ing.**
**D-88682 Salem (DE)**

(54) **Verbrauchsermittlung für Brennstoffzellen-Fahrzeuge**

(57)    Die Erfindung betrifft ein Verfahren zur Kraftstoffverbrauchsermittlung für ein Elektrofahrzeug, das von einem mitgeführten Brennstoffzellensystem mit Energie versorgt wird. Zur Ermittlung des momentanen Kraftstoffverbrauchs pro Zeiteinheit wird der Brennstoffzellenstrom gemessen und daraus die Kraftstoffmenge mit Hilfe eines funktionalen Zusammenhangs berechnet oder aus einem Kennfeld ausgelesen. Dies ist auf einfache Art und Weise möglich, da bei Brennstoffzellen ein linearer Zusammenhang zwischen Brennstoffzellenstrom und verbrauchter Kraftstoffmenge besteht. Die so erhaltene Information wird dem Fahrer über eine Anzeigevorrichtung zugänglich gemacht. Zusätzlich kann auch noch durch Messung der Fahrzeuggeschwindigkeit der Kraftstoffverbrauch pro Fahrstrecke beziehungsweise durch Messung der Brennstoffzellenspannung die Momentanleistung des Elektrofahrmotors ermittelt und angezeigt werden.

Fig. 1

EP 0 711 981 A2

**Beschreibung**

Die Erfindung betrifft ein Verfahren zur Kraftstoffverbrauchsermittlung für ein Antriebsaggregat eines Kraftfahrzeugs gemäß dem Oberbegriff des Patentanspruchs 1.

Aus der DE-OS 28 24 741 ist ein Verfahren zur Ermittlung des Kraftstoffverbrauchs für ein Kraftfahrzeug bekannt, das auf der direkten Messung der Durchflußrate des zugeführten Kraftstoffes beruht. Außerdem wird darin vorgeschlagen, bei einem Fahrzeug mit Elektromotor durch eine Strommessung die verbrauchte Energie pro Fahrstrecke zu ermitteln.

Die Aufgabe der Erfindung besteht darin, für ein Elektrofahrzeug, das von einer mitgeführten Brennstoffzelle mit Energie versorgt wird, den Kraftstoffverbrauch zu ermitteln.

Die Aufgabe wird erfindungsgemäß durch die kennzeichnenden Merkmale des Patentanspruchs 1 gelöst.

Da bei Brennstoffzellen ein linearer Zusammenhang zwischen Strom und Kraftstoffumsatz besteht, kann durch eine einfache Messung des Brennstoffzellenstromes direkt auf den Kraftstoffverbrauch geschlossen werden. Da der Brennstoffzellenstrom ohnehin für die Regelung des Brennstoffzellensystems benötigt wird, kann die Verbrauchsermittlung ohne großen Aufwand in das Steuergerät des Brennstoffzellensystems implementiert werden. Mit Ausnahme eines Anzeigegerätes entsteht somit kein zusätzlicher konstruktiver Aufwand.

Weitere Vorteile und Ausgestaltungen gehen aus den Unteransprüchen und der Beschreibung hervor. Die Erfindung ist nachstehend anhand einer Zeichnung näher beschrieben, wobei

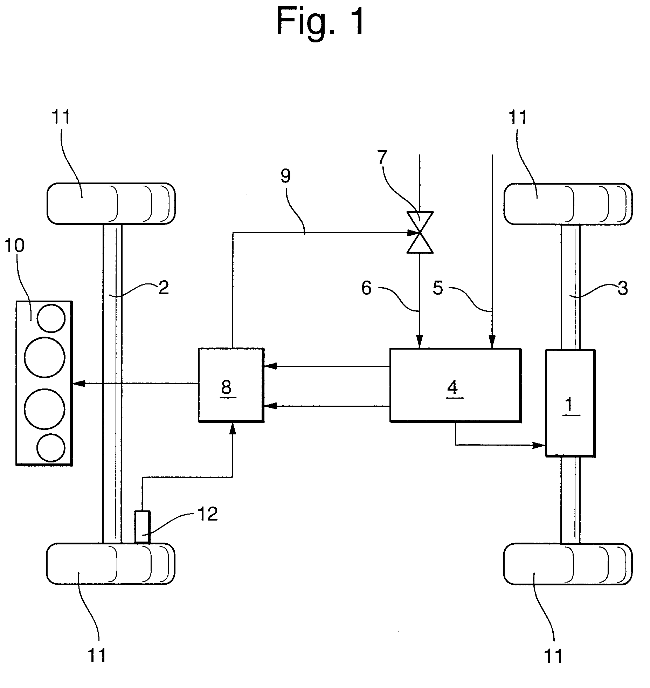

Fig. 1     eine Prinzipdarstellung eines Brennstoffzellenfahrzeugs und

Fig. 2     ein Ausführungsbeispiel eines Verfahrens zur Ermittlung des Kraftstoffverbrauchs für ein mittels Wasserstoff angetriebenes Brennstoffzellenfahrzeugs zeigt.

Das Fahrzeug wird über einen Elektrofahrmotor 1, der an der Vorderachse 2 oder, wie im Ausführungsbeispiel gezeigt, an der Hinterachse 3 angeordnet ist, angetrieben. Im Fahrzeug wird mit Hilfe eines Brennstoffzellensystems 4 ein Strom I erzeugt und dem Elektrofahrmotor 1 direkt zugeführt. Eine Pufferbatterie ist nicht vorgesehen. Das Brennstoffzellensystem 4, das eine einzelne oder einen Stapel von Brennstoffzellen enthält, wird über eine Kraftstoffleitung 5 mit Kraftstoff, beispielsweise Wasserstoffgas, und über eine zweite Zuführung 6 mit einem Oxidant, beispielsweise Luftsauerstoff, versorgt.

Der vom Brennstoffzellensystem 4 erzeugte Strom I wird durch eine Regelung des zugeführten Luftmassenstroms auf einen vorgegebenen Sollwert eingestellt. Hierzu ist in der Zuführung 6 eine Einstellvorrichtung 7 für den Luftmassenstrom angeordnet, die von einem Steuergerät 8 über eine Steuerleitung 9 angesteuert wird. Als Eingangsgrößen werden dem Steuergerät 8 unter anderem die Brennstoffzellenspannung U und der Brennstoffzellenstrom I zugeführt.

Auf der Basis des Brennstoffzellenstromes I wird im Steuergerät 8 der Kraftstoffverbrauch pro Zeiteinheit K aus einem Kennfeld ausgelesen oder mit Hilfe eines funktionalen Zusammenhanges berechnet. Dies ist bei solch einer Anordnung sehr einfach möglich, da bei Brennstoffzellensystemen 4 ein linearer Zusammenhang zwischen Strom I und Kraftstoffverbrauch K besteht.

Der so ermittelte Kraftstoffverbrauch pro Zeiteinheit K kann gegebenenfalls mit Hilfe eines Anzeigeinstruments 10 dem Fahrer zuganglich gemacht werden. Die Angabe des Kraftstoffverbrauchs K kann Beispielsweise in Liter Wasserstoff oder bei einem Brennstoffzellensystem 4, bei dem der Wasserstoff mit Hilfe eines Reformers aus Methanol erzeugt wird, auch in Liter Methanol pro Sekunde erfolgen.

Soll zusätzlich die Information über den Kraftstoffverbrauch pro Fahrstrecke KV ermittelt und angezeigt werden, so muß dem Steuergerät 8 als weitere Eingangsgröße die Fahrzeuggeschwindigkeit V bereitgestellt werden. Hierzu kann an einem der Fahrzeugräder 11 ein Sensor 12 zur Messung der Fahrzeuggeschwindigkeit V vorgesehen werden. Möglich ist es jedoch auch, die Fahrzeuggeschwindigkeit V aus der Motordrehzahl zu ermitteln. Die Anzeige kann hierbei in Liter Wasserstoff oder Methanol pro 100 km erfolgen.

Da im Steuergerät 8 sowohl der Brennstoffzellenstrom I als auch die Brennstoffzellenspannung U vorliegt, kann selbstverständlich auch durch Produktbildung die jeweilige Momentanleistung P des Elektrofahrmotors 1 ermittelt und dem Fahrer angezeigt werden. Diese für den Fahrer ebenfalls interessante Information kann bei einem Verbrennungsmotor mit vertretbarem Aufwand nicht bereitgestellt werden.

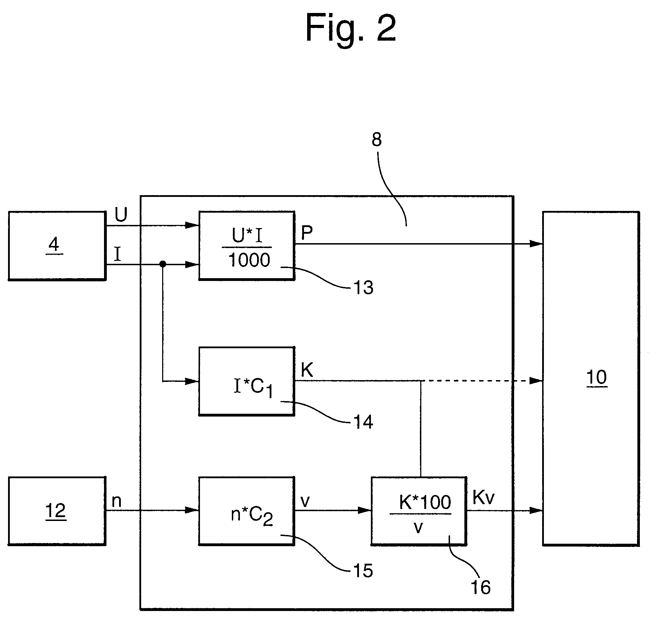

Anhand von Fig. 2 wird nun das Verfahren zur Ermittlung des Kraftstoffverbrauchs anhand eines konkreten Ausführungsbeispiels näher erläutert. Das Ausführungsbeispiel zeigt ein Elektrofahrzeug mit Brennstoffzellensystem, das mit Wasserstoff als Kraftstoff betrieben wird. Am Brennstoffzellensystem 4 wird die Spannung U in [V] und der Strom I in [A] abgegriffen und dem Steuergerät 8 als Eingangsgrößen zugeführt. Zusätzlich wird am Sensor 12 die Raddrehzahl in [$min^{-1}$] gemessen und ebenfalls dem Steuergerät 8 zugeführt. Als Steuergerät kann ein üblicher Mikroprozessor verwendet werden. Gemäß Ausführungsbeispiel werden als Eingangsgrößen eine Spannung von U = 200 V, ein Strom von I = 300 A und eine Raddrehzahl n = 1000 $min^{-1}$ angenommen.

Im Steuergerät 8 wird dann in Block 13 anhand der Formel

$$P = \frac{U*I}{1000} = \frac{200V*300A}{1000} = 60KW$$

die Leistung des Brennstoffzellensystems 4 in [KW] ermittelt und an das Anzeigeinstrument 10 weitergegeben. In einem weiteren Block 14 wird anhand der Formel

$$K = I*C_1 = 300A*0{,}125\frac{Nm^3}{h*A} = 37{,}5\frac{Nm^3}{h}$$

der zeitliche Kraftstoffverbrauch K des Brennstoffzellensystems 4 in [Nm³/h] oder in [l/h] ermittelt, wobei sich die Konstante $C_1$ für ein mit Wasserstoff gespeistes Brennstoffzellensystem 4 mit z = 300 in Serie geschalteten Brennstoffzellen errechnet nach

$$C_1 = \frac{z*22{,}4\frac{1}{mol}*3600\frac{s}{h}}{2*96485\frac{A*s}{mol}*1000\frac{1}{m^3}} = 0{,}125\frac{Nm^3}{h*A}$$

Dieser zeitliche Kraftstoffverbrauch K kann nun entweder direkt dem Anzeigeinstrument 10 oder aber zur Weiterverarbeitung dem Block 16 zugeführt werden.

Soll anstelle oder zusätzlich zum zeitlichen Kraftstoffverbrauch K der Kraftstoffverbrauch pro Fahrstrecke KV ermittelt werden, so wird zuerst in Block 15 ausgehend von der Raddrehzahl n anhand der Formel

$$V = n*C_2 = 1000\frac{1}{min}*0{,}094\frac{km*min}{h} = 94\frac{km}{h}$$

die Fahrzeuggeschwindigkeit V in [km/h] ermittelt, wobei sich die Konstante $C_2$ für ein Fahrzeug mit einem Raddurchmesser d von 0,5 m errechnet zu

$$C_2 = \frac{d*\pi*60\frac{min}{h}}{1000\frac{m}{km}} = 0{,}094\frac{km*min}{h}$$

Anschließend wird in Block 16 ausgehend von der Fahrzeuggeschwindigkeit V und dem in Block 14 ermittelten zeitlichen Kraftstoffverbrauch K der Kraftstoffverbrauch pro Fahrstrecke KV nach der Formel

$$KV = \frac{K*100}{V} = \frac{37{,}5\frac{Nm^3}{h}*100}{94\frac{km}{h}} = 39{,}9\frac{Nm^3}{100km}$$

ermittelt und an das Anzeigeinstrument 2 weitergegeben.

**Patentansprüche**

1. Verfahren zur Kraftstoffverbrauchsermittlung für ein Antriebsaggregat eines Kraftfahrzeugs,
   **dadurch gekennzeichnet,**
   daß bei einem Fahrzeug mit Elektrofahrmotor (1), bei dem der benötigte Strom (I) von einem mitgeführten Brennstoffzellensystem (4) erzeugt und dem Elektrofahrmotor (1) direkt zugeführt wird, der Brennstoffzellenstrom (I) gemessen und daraus die zugeführte Kraftstoffmenge pro Zeiteinheit (K) ermittelt wird.

3

2.  Verfahren nach Anspruch 1,
    **dadurch gekennzeichnet,**
    daß zusätzlich die Fahrzeuggeschwindigkeit (V) gemessen und daraus der Kraftstoffverbrauch pro Fahrstrecke (KV) ermittelt wird.

3.  Verfahren nach Anspruch 1,
    **dadurch gekennzeichnet,**
    daß zusätzlich die Brennstoffzellenspannung (U) gemessen und daraus die Leistung (P) ermittelt wird.

4.  Verfahren nach Anspruch 1,
    **dadurch gekennzeichnet,**
    daß die Verbrauchswerte (K, KV, P) dem Fahrer mit Hilfe eines Anzeigeinstruments (10) angezeigt werden.

# Fig. 1

# Fig. 2